# DEMANDE DE BREVET EUROPEEN

(11) **EP 0 762 805 A1**
(43) Date de publication de la demande: **12.03.1997**
(21) Numéro de dépôt: 96810584.1
(22) Date de dépôt: 05.09.1996
(51) Int. Cl.: H05B 33/08

(54) **Circuit d'alimentation pour cellule électroluminescente et procédé pour alimenter une telle cellule**

(30) Priorité: 06.09.1995 CH 2524/95
(71) Demandeur: ISA FRANCE S.A., F-25130 Villers-le-Lac (FR)
(72) Inventeur: Mossuz, Gabriel, F-74100 Annemasse (FR); Puthod, Pascal, F-74800 Arenthon (FR)
(74) Mandataire: Nithardt, Roland

(57) **Abrégé**

Ce circuit d'alimentation (10) comporte une source d'alimentation en énergie électrique (12), un circuit élévateur de tension (13) et un circuit de décharge (14). Le circuit élévateur de tension (13) est commandé par un signal logique V1 ayant une fréquence F1 ajustable de 8192 Hz à 32768 Hz et un rapport cyclique de découpage r1 variable. Le circuit de décharge (14) est commandé par un signal logique V2 ayant une fréquence F2 fixe et un rapport cyclique de découpage r2 ajustable, ces signaux V1 et V2 étant générés à partir d'une chaîne de division de fréquence associée à un oscillateur à quartz. La valeur des fréquences et des rapports cycliques de découpage est choisie en connectant des entrées de portes logiques à une tension continue choisie parmi deux tensions disponibles. Pendant une première phase du procédé, le circuit élévateur de tension (13) élève la tension fournie par la source électrique (12) jusqu'à une valeur suffisante pour exciter la cellule électroluminescente. Pendant une deuxième phase, on décharge la cellule par l'intermédiaire du circuit de décharge (14). Il est également possible de rendre r1 et F2 ajustables

## Description

La présente invention concerne un circuit d'alimentation pour cellule électroluminescente comportant deux électrodes et ayant une capacité interne définie, notamment pour un cadran d'instrument horaire tel qu'une montre ou une pendulette, ce circuit comportant une source d'alimentation en énergie électrique délivrant une tension continue inférieure à 5 V, un oscillateur à quartz ayant une fréquence propre définie, associé à une chaîne de division de la fréquence de l'oscillateur, un circuit élévateur de tension et des moyens pour générer une tension périodique, ces moyens comportant un circuit de décharge de la capacité interne de la cellule électroluminescente dont l'une des électrodes est reliée à l'un des potentiels de la source d'alimentation, le circuit élévateur de tension comportant au moins un transistor, une inductance et une diode, le transistor du circuit élévateur de tension recevant un signal logique V1 défini par deux paramètres qui sont sa fréquence F1 et son rapport cyclique de découpage r1.

L'invention concerne également un procédé d'alimentation d'une cellule électroluminescente comportant deux électrodes dont l'une est alimentée à un potentiel constant, et ayant une capacité interne définie, notamment pour un cadran d'instrument horaire tel qu'une montre ou une pendulette comportant une source d'alimentation en énergie électrique délivrant une tension continue inférieure à 5 V, et un oscillateur à quartz ayant une fréquence propre définie, associé à une chaîne de division de la fréquence de l'oscillateur, dans lequel on transforme ladite tension continue inférieure à 5V en une tension périodique supérieure à 50 V crête au moyen d'un circuit élévateur de tension recevant un signal logique V1 défini par deux paramètres qui sont sa fréquence F1 et son rapport cyclique de découpage r1, et d'un circuit de décharge de la capacité interne de la cellule recevant un signal V2 défini par deux paramètres qui sont sa fréquence F2 et son rapport cyclique de découpage r2, le signal V1 étant maintenu à un niveau logique bas lorsque le signal V2 est à un niveau logique haut et le signal V2 étant maintenu à un niveau logique bas lorsque le signal V1 oscille à ladite fréquence F1.

Un certain nombre d'instruments horaires tels que des montres ou des pendulettes comportent des aiguilles ou un cadran électroluminescents permettant d'effectuer une lecture de l'heure dans l'obscurité. Un tel cadran est généralement formé d'une feuille de matière électroluminescente composée de quatre couches de matière. La première couche est constituée d'une matière conductrice, la deuxième est une couche de matière diélectrique isolante antimoisissure, la troisième couche contient des particules électroluminescentes noyées dans un liant tel qu'une résine époxy, et la quatrième couche est également constituée d'une couche conductrice. Ces quatre couches sont recouvertes d'une feuille transparente isolante sur laquelle sont imprimées des indications facilitant la lecture de l'heure. Une différence de potentiel est appliquée entre la première et la quatrième couche pour illuminer le cadran.

Un cadran tel que décrit ci-dessus nécessite une tension d'alimentation périodique qui peut être comprise entre 60 et 100 Volts et dont la fréquence se situe entre 50 et 3000 Hz. Lorsqu'un tel cadran est monté dans une montre ayant une pile délivrant une tension nominale continue de 1,5 Volts, l'alimentation du cadran nécessite un circuit spécifique.

Un tel circuit est notamment décrit dans le brevet anglais publié sous le numéro GB-A-2 104 255. Le circuit d'alimentation comporte un circuit de charge et un circuit de décharge de la capacité interne d'une cellule électroluminescente. Le circuit de charge comporte un transistor bipolaire sur la base duquel est appliqué un premier signal logique ayant une fréquence déterminée. Ce circuit permet d'augmenter graduellement la tension aux bornes de la cellule jusqu'à une valeur d'environ 100 V. Le circuit de décharge comporte également un transistor bipolaire sur la base duquel est appliqué un signal logique. Ce signal est maintenu au niveau logique 0 pendant que le signal du circuit de charge oscille, puis il est mis au niveau logique 1, ce qui a pour effet de décharger la capacité interne de la cellule électroluminescente. Ceci permet d'obtenir une tension périodique d'environ 800 Hz ayant une tension maximale d'environ 100 V, ce qui permet d'activer la cellule.

Ce circuit d'alimentation présente différents inconvénients. En particulier, la fréquence d'alimentation de la cellule électroluminescente est fixe. Ceci empêche d'utiliser ce circuit pour différents types de cellules, ayant des dimensions ou des constantes diélectriques différentes. En pratique, il est nécessaire de réaliser un circuit pour chaque type de cellule. D'autre part, bien que ce circuit utilise un oscillateur du type de ceux utilisés en horlogerie, il n'est pas bien adapté à une application horlogère. En effet, les composants utilisés pour l'alimentation de la cellule doivent résister à des tensions élevées, alors que ceux permettant le fonctionnement de la montre en mode normal, comme par exemple ceux alimentant le moteur, doivent avoir une faible consommation, sans qu'il leur soit nécessaire de résister à des tensions élevées. Ceci oblige à réaliser deux circuits différents si on souhaite ajouter la fonction d'électroluminescence à la montre.

La présente invention se propose de pallier ces inconvénient en réalisant un circuit d'alimentation pour une cellule électroluminescente dont l'une des électrodes reste à un potentiel fixe et dans lequel les paramètres de l'alimentation peuvent être modifiés en fonction de la dimension de la cellule utilisée. D'autre part, un circuit monocomposant peut être utilisé pour l'alimentation de la cellule électroluminescente et pour les autres fonctions de l'instrument horaire. Ce circuit est en outre réalisé d'une manière unique quels que soient les paramètres de la cellule qu'il doit alimenter.

Ces buts sont atteints par un circuit tel que défini en préambule et caractérisé en ce qu'il comporte des moyens pour ajuster au moins l'un de ces deux paramètres.

Selon une forme de réalisation particulière, le circuit comporte des moyens pour ajuster les deux paramètres du signal logique V1, c'est-à-dire sa fréquence F1 et sont rapport cyclique de découpage r1.

Selon une forme de réalisation préférée, la fréquence F1 du signal logique V1 est ajustée à une valeur supérieure à 4 kHz, et de préférence à une valeur comprise entre 8192 à 32768 Hz.

Le circuit de décharge comporte avantageusement un transistor recevant un signal logique V2 défini par deux paramètres qui sont sa fréquence F2 et son rapport cyclique de découpage r2, et des moyens pour ajuster au moins l'un de ces deux paramètres.

Le circuit peut également comporter des moyens pour ajuster les deux paramètres du signal logique V2, c'est-à-dire sa fréquence F2 et son rapport cyclique de découpage r2.

Selon une forme de réalisation particulière, le signal logique V2 a un rapport cyclique de découpage r2 ajustable de 1/2 à 1/8.

Selon une forme de réalisation préférée, les moyens pour ajuster les paramètres du signal V1 comportent au moins une entrée d'une première porte logique connectée à la chaîne de division de la fréquence de l'oscillateur à quartz, cette entrée pouvant recevoir deux tensions d'alimentation différentes de façon à déterminer la fréquence F1 du signal logique V1.

Selon un mode de réalisation préféré, les moyens pour ajuster les paramètres du signal V2 comportent au moins une entrée d'une deuxième porte logique connectée à la chaîne de division de la fréquence de l'oscillateur à quartz, cette entrée pouvant recevoir deux tensions d'alimentation différentes de façon à déterminer le rapport cyclique de découpage r2 du signal logique V2.

Les buts fixés sont également atteints par un procédé tel que défini en préambule et caractérisé en ce que l'on ajuste au moins l'un des paramètres du signal logique V1 en fonction de la cellule électroluminescente alimentée.

Selon une forme de réalisation particulière, l'on ajuste les deux paramètres du signal logique V1, c'est-à-dire sa fréquence F1 et son rapport cyclique de découpage r1.

Selon un mode de réalisation préféré, l'on ajuste la fréquence F1 du signal V1 en délivrant une tension déterminée parmi deux tensions possibles à une entrée d'une première porte logique connectée à la chaîne de division de la fréquence de l'oscillateur à quartz.

Selon une forme de réalisation préférée, l'on ajuste au moins l'un des paramètres du signal logique V2 en fonction de la cellule électroluminescente alimentée.

Selon une autre forme de réalisation, l'on ajuste les deux paramètres du signal logique V2, c'est-à-dire sa fréquence F2 et son rapport cyclique de découpage r2.

Selon un mode de réalisation préféré, l'on ajuste le rapport cyclique de découpage r2 du signal V2 en délivrant une tension déterminée parmi deux tensions possibles à une entrée d'une deuxième porte logique connectée à la chaîne de division de la fréquence de l'oscillateur à quartz.

On choisit avantageusement une fréquence F1 du signal V1 supérieure à 4 kHz et de préférence comprise entre 8192 Hz et 32768 Hz.

Selon un mode de réalisation préféré, on choisit un rapport cyclique de découpage r2 compris entre 1/2 et 1/8.

La présente invention et ses avantages seront mieux compris en référence à la description d'exemples de réalisation non limitatifs et aux dessins annexés dans lesquels :
- la figure 1 est une vue schématique d'un premier mode de réalisation du circuit d'alimentation selon la présente invention,
- la figure 2 est une vue schématique d'un second mode de réalisation du circuit d'alimentation selon la présente invention,
- la figure 3 représente sous forme de diagrammes temporels, les signaux de commande et la tension aux bornes de la cellule électroluminescente, et

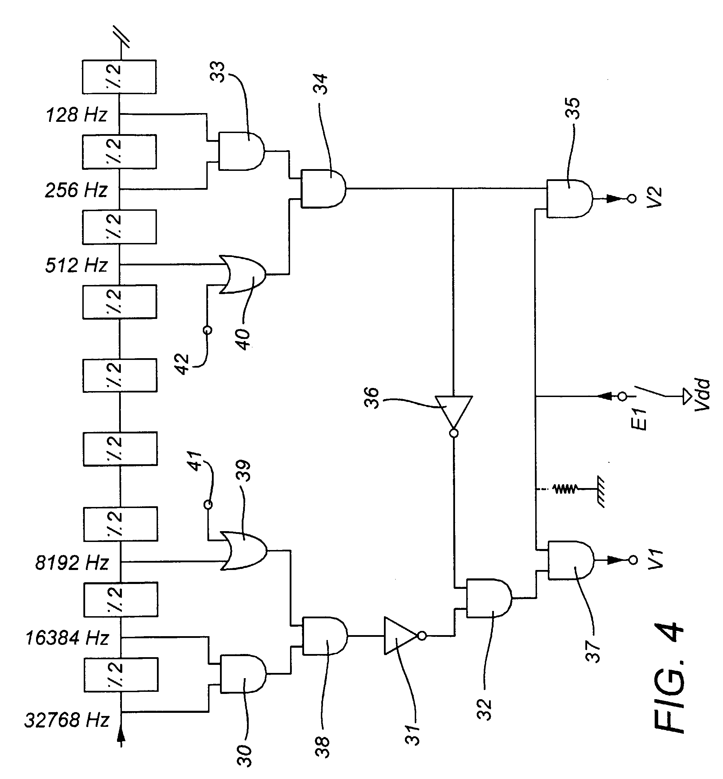

- la figure 4 représente un exemple de schéma logique permettant d'obtenir des signaux V1 et V2 ajustables à partir de la chaîne de division de la fréquence de l'oscillateur.

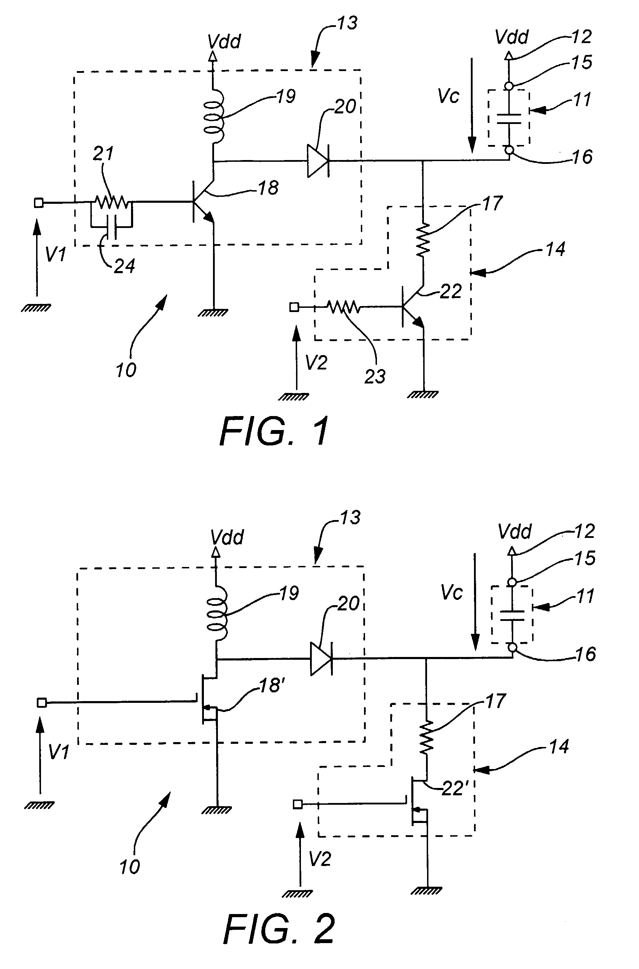

En référence à la figure 1, le circuit d'alimentation 10 pour une cellule électroluminescente 11 est formé essentiellement d'une source d'alimentation en énergie électrique 12 fournissant une tension continue V_{dd} d'environ 1,5 V, d'un circuit élévateur de tension 13 et d'un circuit de décharge 14. La cellule électroluminescente 11 peut être utilisée comme cadran d'une montre comportant un oscillateur tel qu'un quartz fournissant une oscillation à une fréquence de 32768 Hz et une chaîne de division de la fréquence, bien connue de l'homme du métier. Une première borne 15 de la cellule est reliée à la source de tension V_{dd} et une deuxième borne 16 est reliée au circuit élévateur de tension 13 d'une part et au circuit de décharge 14 d'autre part.

Le circuit élévateur de tension comporte un transistor bipolaire 18 commandé par un signal logique V1, une inductance 19 et une diode 20. La base du transistor 18 reçoit le signal V1 par l'intermédiaire d'une résistance 21 et d'un condensateur 24 montés en parallèle. Ce condensateur 24 permet de diminuer les temps de commutation du transistor 18. L'inductance 19 est constituée d'un fil conducteur enroulé autour d'un noyau de ferrite, ce qui permet de minimiser la place nécessaire.

Le circuit de décharge 14 comporte un transistor bipolaire 22 commandé par un signal logique V2 et une résistance 17 limitant le courant de décharge. La base du transistor 22 reçoit le signal V2 par l'intermédiaire d'une résistance 23.

Les signaux logiques V1 et V2 sont générés à partir de la chaîne de division de fréquence de la montre par un circuit électronique de conception spécifique intégré ou non. Ces signaux logiques pourraient également être générés par un microcontrôleur. Ils peuvent être activés manuellement lorsqu'un utilisateur actionne un poussoir de la montre ou automatiquement par exemple lors du déclenchement d'une alarme.

La figure 2 illustre une variante de réalisation du circuit d'alimentation dans laquelle les transistors bipolaires 18 et 22 de la figure 1 sont remplacés par des transistors MOS 18' et 22'. Dans ce mode de réalisation, la résistance 21 et le condensateur 24 du circuit d'élévation de la tension sont supprimés, de même que la résistance 23 du circuit de décharge. Ces transistors MOS comportent une grille qui correspond à la base des transistors bipolaires, un drain qui correspond au collecteur et une source qui correspond à l'émetteur.

L'utilisation de transistors MOS permet de réaliser un circuit intégré monocomposant pour alimenter la cellule électroluminescente et pour réaliser les fonctions conventionnelles de l'instrument horaire. En effet, les composants de ce circuit doivent résister aux tensions élevées nécessaires à l'alimentation de la cellule et doivent avoir une faible consommation pour les fonctions conventionnelles, ce qui est le cas en utilisant une technologie particulière des transistors MOS, à savoir celle supportant des tensions élevées avec une faible consommation de courant.

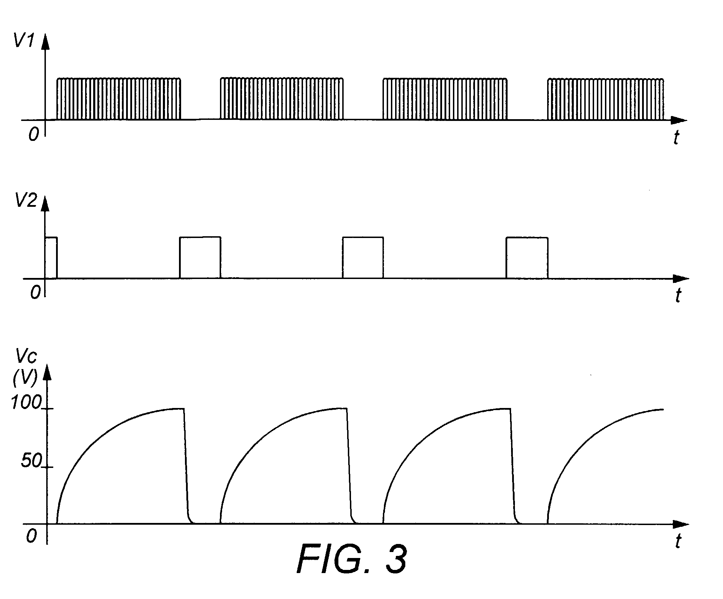

Le principe de fonctionnement de ces deux modes de réalisation est identique et peut se décomposer en deux phases, illustrées par la figure 3. Pendant la première phase, le circuit 13 élève la tension fournie par la source électrique 12 de façon à obtenir une tension suffisante pour exciter la cellule électroluminescente 11. Pendant la deuxième phase, cette tension est annulée. La succession de ces deux phases permet d'obtenir une tension périodique nécessaire au fonctionnement de la cellule.

Pendant la première phase qui correspond à l'élévation de la tension, le signal logique V2 appliqué sur la base du transistor 22 ou sur la grille du transistor 22' est au niveau logique bas et bloque ce transistor. Le signal V1 appliqué par l'intermédiaire de la résistance 21 à la base du transistor 18 ou sur la grille du transistor 18' délivre des impulsions de tension. Lorsque le signal V1 est au niveau logique haut, le transistor 18 ou 18' est saturé et un courant circule dans l'inductance 19. La diode 20 est alors bloquée. Lorsque le signal V1 passe au niveau logique bas, le transistor 18 ou 18' se bloque. La variation brutale de courant entraîne alors une élévation importante du potentiel du collecteur du transistor 18 ou du drain du transistor 18'. Lorsque ce potentiel devient supérieur au potentiel de la deuxième électrode 16 de la cellule électroluminescente, la diode 20 devient passante. Le potentiel à cette deuxième électrode suit alors le potentiel au collecteur du transistor 18 ou au drain du transistor 18'. Lorsque le potentiel au collecteur ou au drain décroît, la diode 20 se bloque et la capacité naturelle de la cellule électroluminescente 11 maintient la tension à ses bornes à la valeur maximale de la surtension. La succession des variations de niveau du signal V1 entraîne des successions de surtensions sur le collecteur du transistor 18 ou sur le drain du transistor 18'. Ainsi, la tension aux bornes de la cellule électroluminescente s'élève progressivement.

La deuxième phase correspond à l'annulation de la tension. Pendant cette phase, le signal V1 appliqué à la base du transistor 18 ou la grille du transistor 18' est au niveau logique bas et bloque donc ce transistor. Lorsque le signal V2 appliqué à la base du transistor 22 ou à la grille du transistor 22' passe au niveau logique haut, ce transistor devient passant. La tension aux bornes de la cellule électroluminescente décroît selon une constante de temps égale au produit de la valeur de la capacité de la cellule et de la résistance 17.

Lorsque le potentiel de l'électrode 16 devient inférieur à la tension d'alimentation V_{dd}, la diode 20 redevient passante. La résistance 17 limite alors le courant circulant à travers l'inductance 19, la diode 20 et le courant au collecteur du transistor 22 ou au drain du transistor 22', jusqu'à la nouvelle phase d'élévation de tension. La succession des phases d'élévation de tension et de décharge permet d'obtenir une tension périodique de fréquence F2. Le temps nécessaire pour atteindre une tension aux bornes de la cellule électroluminescente suffisante pour l'illuminer se fait en choisissant de façon judicieuse, les fréquences F1 et F2 ainsi que les rapports cycliques de découpage r1 et r2 qui sont définis par les rapports entre les temps de conduction et de blocage des transistors 18 et 22 ou 18' et 22'.

Le circuit d'alimentation selon la présente invention est particulièrement adapté pour être monté dans une montre telle qu'une montre bracelet dans laquelle la cellule électroluminescente fait office de cadran permettant la lecture de l'heure dans l'obscurité. Dans un tel mode de réalisation, les fréquences disponibles pour les signaux logiques V1 et V2 sont issues de la chaîne de division de la fréquence de 32768 Hz fournie par un oscillateur à quartz et ne peuvent donc être que des sous-multiples de cette fréquence. Cette chaîne de division ainsi que le circuit logique permettant d'obtenir les signaux V1 et V2 sont illustrés par la figure 3.

Le circuit délivrant les signaux V1 et V2 comporte une porte logique ET 30 à deux entrées recevant respectivement une fréquence de 32768 Hz et de 16384 Hz. Il comporte en outre une porte logique OU 39 dont une entrée reçoit un signal à une fréquence de 8192 Hz et dont l'autre entrée 41 reçoit un signal de niveau logique continu. Les sorties de la porte ET 30 et de la porte OU 39 sont introduites dans une porte ET 38 dont la sortie passe dans un inverseur 31 qui est connecté à une première entrée d'une porte ET 32.

Le circuit comporte également une porte ET 33 à deux entrées recevant respectivement des signaux à 256 et à 128 Hz. Il comporte en outre une porte OU 40 dont une entrée reçoit un signal à 512 Hz et dont l'autre entrée 42 reçoit un signal logique de niveau continu. Les signaux de sortie de la porte ET 33 et de la porte OU 40 sont introduits dans une porte ET 34. Le signal de sortie de cette porte ET 34 est transmis d'une part à une porte ET 35 dont l'autre entrée reçoit un signal E1 d'activation et dont la sortie donne le signal V2, et d'autre part à un inverseur 36, puis à une deuxième entrée de la porte ET 32. Le signal sortant de cette porte 32 est introduit dans une porte ET 37 dont l'autre entrée reçoit le signal E1 d'activation. La sortie de cette porte 37 donne le signal V1.

Selon le niveau logique reçu par l'entrée 41 de la porte OU 39, le signal logique V1 peut avoir une fréquence F1 de 8192 Hz et un rapport cyclique r1 de 7/8 ou une fréquence F1 égale à 16384 Hz et un rapport cyclique r1 de 3/4. De même, selon le niveau logique reçu par l'entrée 42 de la porte OU 40, le signal V2 de fréquence F2 égale à 128 Hz peut avoir un rapport cyclique r2 de 1/8 ou de 1/4.

Lorsque la fréquence F1 est de 16384 Hz avec un rapport cyclique r1 de 3/4, que la fréquence F2 est de 128 Hz avec un rapport cyclique r2 de 1/8 et que l'inductance 19 est de 8 mH, on obtient une tension de l'ordre de 100 V aux bornes d'une cellule ayant une capacité naturelle de l'ordre de 2 nF. La consommation moyenne de courant est d'environ 2,5 mA pour une pile de 1,5 V.

Le mode de réalisation tel que décrit ci-dessus est particulièrement avantageux puisqu'une des électrodes de la cellule électroluminescente est à un potentiel fixe qui est en général l'un des deux potentiels de la source d'alimentation. Il suffit de générer une tension variable sur l'autre électrode ce qui permet une simplification considérable du circuit électrique, car seuls deux signaux de commande sont nécessaires. D'autre part, comme le potentiel d'une électrode de la cellule électroluminescente est constant, cette électrode peut être en contact avec d'autres pièces métalliques du mouvement pouvant se trouver au même potentiel. Ceci permet également de simplifier le montage de la montre en supprimant des isolateurs ou des couches de matière isolante entre les différents composants.

En outre, les composants utilisés fonctionnent aussi bien pour alimenter la cellule électroluminescente à une tension relativement élevée que pour réaliser les fonctions conventionnelles de la montre, auquel cas, la consommation doit être faible. Ceci permet de réaliser un circuit intégré monocomposant pour toutes les fonctions de l'instrument horaire, ce qui est particulièrement intéressant du point de vue de la simplification du montage et de la réduction de l'espace nécessaire.

D'autre part, le choix des fréquences et des rapports cycliques est particulièrement intéressant du fait qu'un même circuit intégré peut être utilisé pour toute une gamme de cellules ayant des dimensions ou des caractéristiques physiques différentes. Ce choix est réalisé au moment du montage du circuit intégré sur l'unité électronique en connectant les entrées 41 et 42 selon certaines options. Les options doivent être déterminées en fonction de la capacité du cadran, c'est-à-dire de la surface, de la composition, et de l'épaisseur de la matière électroluminescente et du diélectrique isolant, de façon à donner un éclairement optimal. Il est à noter que pour les signaux V1 et V2, il est possible de choisir soit la fréquence, soit le rapport cyclique de découpage, soit les deux.

La présente invention n'est pas limitée au mode de réalisation décrit, mais s'étend à toute modification évidente pour l'homme du métier. En particulier, il est possible d'introduire dans le circuit logique d'autres portes logiques permettant un plus grand choix de fréquences et de rapports cycliques, afin d'optimiser l'alimentation des cellules utilisées.

## Revendications

1. Circuit d'alimentation pour cellule électroluminescente comportant deux électrodes et ayant une capacité interne définie, notamment pour un cadran d'instrument horaire tel qu'une montre ou une pendulette, ce circuit comportant une source d'alimentation en énergie électrique délivrant une tension continue inférieure à 5 V, un oscillateur à quartz ayant une fréquence propre définie, associé à une chaîne de division de la fréquence de l'oscillateur, un circuit élévateur de tension et des moyens pour générer une tension périodique, ces moyens comportant un circuit de décharge de la capacité interne de la cellule électroluminescente (11) dont l'une des électrodes (15) est reliée à l'un des potentiels de la source d'alimentation (12), le circuit élévateur de tension comportant au moins un transistor, une inductance et une diode, le transistor (18, 18') du circuit élévateur de tension (13) recevant un signal logique V1 défini par deux paramètres qui sont sa fréquence F1 et son rapport cyclique de découpage r1, caractérisé en ce qu'il comporte des moyens pour ajuster au moins l'un de ces deux paramètres.

2. Circuit selon la revendication 1, caractérisé en ce qu'il comporte des moyens pour ajuster les deux paramètres du signal V1, c'est-à-dire sa fréquence F1 et son rapport cyclique de découpage r1.

3. Circuit selon la revendication 1, caractérisé en ce que la fréquence F1 du signal logique V1 est ajustée à une valeur supérieure à 4 kHz.

4. Circuit selon la revendication 3, caractérisé en ce que la fréquence F1 du signal logique V1 est ajustée à une valeur comprise entre 8192 à 32768 Hz.

5. Circuit selon la revendication 1, caractérisé en ce que le circuit de décharge (14) comporte un transistor (22, 22') recevant un signal logique V2 défini par deux paramètres qui sont sa fréquence F2 et son rapport cyclique de découpage r2, et en ce qu'il comporte des moyens pour ajuster au moins l'un de ces deux paramètres.

6. Circuit selon la revendication 5, caractérisé en ce qu'il comporte des moyens pour ajuster les deux paramètres du signal logique V2, c'est-à-dire sa fréquence F2 et son rapport cyclique de découpage r2.

7. Circuit selon la revendication 5, caractérisé en ce que le signal logique V2 a un rapport cyclique de découpage r2 ajustable de 1/2 à 1/8.

8. Circuit selon la revendication 1, caractérisé en ce que les moyens pour ajuster les paramètres du signal V1 comportent au moins une entrée (41) d'une première porte logique connectée à la chaîne de division de la fréquence de l'oscillateur à quartz, cette entrée pouvant recevoir deux tensions d'alimentation différentes de façon à déterminer la fréquence F1 du signal logique V1.

9. Circuit selon la revendication 5, caractérisé en ce que les moyens pour ajuster les paramètres du signal V2 comportent au moins une entrée (42) d'une deuxième porte logique connectée à la chaîne de division de la fréquence de l'oscillateur à quartz, cette entrée pouvant recevoir deux tensions d'alimentation différentes de façon à déterminer le rapport cyclique de découpage r2 du signal logique V2.

10. Procédé d'alimentation d'une cellule électroluminescente comportant deux électrodes dont l'une est alimentée à un potentiel constant, et ayant une capacité interne définie, notamment pour un cadran d'instrument horaire tel qu'une montre ou une pendulette comportant une source d'alimentation en énergie électrique délivrant une tension continue inférieure à 5 V, et un oscillateur à quartz ayant une fréquence propre définie, associé à une chaîne de division de la fréquence de l'oscillateur, dans lequel on transforme ladite tension continue inférieure à 5V en une tension périodique supérieure à 50 V crête à crête au moyen d'un circuit élévateur de tension recevant un signal logique V1 défini par deux paramètres qui sont sa fréquence F1 et son rapport cyclique de découpage r1, et d'un circuit de décharge de la capacité interne de la cellule recevant un signal V2 défini par deux paramètres qui sont sa fréquence F2 et son rapport cyclique de découpage r2, le signal V1 étant maintenu à un niveau logique bas lorsque le signal V2 est à un niveau logique haut et le signal V2 étant maintenu à un niveau logique bas lorsque le signal V1 oscille à ladite fréquence F1, caractérisé en ce que l'on ajuste au moins l'un des paramètres du signal logique V1 en fonction de la cellule électroluminescente alimentée.

11. Procédé selon la revendication 10, caractérisé en ce que l'on ajuste les deux paramètres du signal logique V1, c'est-à-dire sa fréquence F1 et son rapport cyclique de découpage r1.

12. Procédé selon la revendication 10, caractérisé en ce que l'on ajuste la fréquence F1 du signal V1 en délivrant une tension déterminée parmi deux tensions possibles à une entrée (41) d'une première porte logique (39) connectée à la chaîne de division de la fréquence de l'oscillateur à quartz.

13. Procédé selon la revendication 10, caractérisé en ce que l'on ajuste au moins l'un des paramètres du signal logique V2 en fonction de la cellule électroluminescente alimentée.

14. Procédé selon la revendication 13, caractérisé en ce que l'on ajuste les deux paramètres du signal logique V2, c'est-à-dire sa fréquence F2 et son rapport cyclique de découpage r2.

15. Procédé selon la revendication 13, caractérisé en ce que l'on ajuste le rapport cyclique de découpage r2 du signal V2 en délivrant une tension déterminée parmi deux tensions possibles à une entrée (42) d'une deuxième porte logique (40) connectée à la chaîne de division de la fréquence de l'oscillateur à quartz.

16. Procédé selon la revendication 10, caractérisé en ce que l'on choisit une fréquence F1 du signal V1 supérieure à 4 kHz.

17. Procédé selon la revendication 16, caractérisé en ce que l'on choisit une fréquence F1 du signal V1 comprise entre 8192 Hz et 32768 Hz.

18. Procédé selon la revendication 10, caractérisé en ce que l'on choisit un rapport cyclique de découpage r2 compris entre 1/2 et 1/8.
